# FASCICULE DE BREVET EUROPEEN

(11) **EP 0 375 486 B1**
(45) Date de publication et mention de la délivrance du brevet: **19.01.1994**
(21) Numéro de dépôt: 89403282.0
(22) Date de dépôt: 28.11.1989
(51) Int. Cl.: B29C 67/24, B29C 43/48, B29C 59/04

(54) **Procédé d'obtention d'un panneau surface à base de fibres minérales**
Verfahren zum Herstellen einer oberflächenbehandelten Platte aus Mineralfasern
Method for manufacturing a surface-treated mineral fibre-based board

(30) Priorité: 21.12.1988 FR 8816895
(43) Date de publication de la demande: 27.06.1990
(73) Titulaire: ISOVER SAINT-GOBAIN, F-92400 Courbevoie (FR)
(72) Inventeur: Brossy, Pierre, F-71100 Chalon sur Saône (FR)
(74) Mandataire: Menes, Catherine

(56) Documents cités:
- EP-A- 0 000 111
- CH-A- 620 861
- FR-A- 1 547 950
- FR-A- 2 548 695
- GB-A- 1 150 659
- US-A- 2 997 096
- US-A- 3 082 143

## Description

L'invention concerne un procédé de fabrication de produits en laine minérale selon le préamble de la revendication 1 (voir FR-A-2 548 695).

L'invention a pour objet un procédé d'obtention d'un panneau surfacé à base de fibres minérales, notamment de fibres de verre dites d'isolation. Elle s'applique particulièrement à la fabrication de panneaux d'isolation acoustique et/ou thermique comportant un revêtement sur une face laissée apparente après le montage, tels par exemple des panneaux pour plafonds de locaux industriels ou commerciaux.

Un tel panneau est généralement constitué par une couche en fibres minérales, telles des fibres de verre liées par un liant organique sur laquelle est collée côté apparent une couche de parement destinée à lui conférer un aspect fini décoratif. Selon le degré de finition désiré, l'humidité des locaux ou le degré d'isolation acoustique souhaité, cette couche de parement est du type film de polychlorure de vinyle, voile de fibres de verre éventuellement peint, pour parfaire son aspect décoratif, film d'aluminium couché sur papier kraft pouvant de même être couvert d'une couche de peinture ou tout autre matériau connu de cet art.

Dans la mesure où ces panneaux servent de décors et même si leur utilisation est généralement limitée à des locaux dont la hauteur de plafond est supérieure par exemple à 10 mètres, l'aspect du panneau est particulièrement important aussi faut-il en particulier éviter la formation de plis inesthétiques. D'autre part, pour une bonne tenue du matériau, il est également important d'éviter toute boursouflure qui forme une amorce de décollage du parement. Cette condition impose donc que l'état de surface de la couche de base soit suffisamment lisse avant de procéder au collage de la couche de parement.

Or comme indiqué précédemment cette couche de base est une couche de laine de verre comprimée, dont l'épaisseur est généralement comprise entre 10 et 100 mm. Le procédé d'obtention de cette couche de base est commun à la plupart des produits isolants en laine de verre et comporte par exemple et de façon connue les phases suivantes : en continu, on amène le verre à l'état fondu à proximité de la paroi périphérique d'un centrifugeur tournant à grande vitesse de telle sorte que sous l'effet de la force centrifuge le verre fondu est éjecté par les orifices en dehors du centrifugeur sous forme de filaments radiaux qui sont immédiatement étirés en fibres par un courant gazeux annulaire émis à grande vitesse et à température élevée par une couronne de soufflage placée juste au-dessus de la paroi périphérique du centrifugeur, le courant gazeux ayant une direction essentiellement perpendiculaire à la direction d'émission des filaments. Pour des fibres à base de roche basaltique ou de laitiers, on utilise plutôt le procédé de fibrage dit à centrifugation libre. Dans les deux cas une composition d'encollage à base d'une résine thermodurcissable est pulvérisée sur les fibres qui sont ensuite recueillies par un organe de réception constitué par exemple par une bande convoyeuse sans fin.

Même si on utilise des dispositifs destinés à uniformiser la répartition des fibres, le matelas obtenu n'a jamais une épaisseur rigoureusement constante et certaines des inégalités créées peuvent se retrouver sur le produit fini. D'autre part, le matelas de fibres est ensuite conduit à un dispositif de formage dans lequel on le comprime et on provoque la polymérisation du liant. La compression et le transport du matelas sont obtenus dans une enceinte chauffée avec circulation forcée de courants gazeux au moyen de deux convoyeurs complémentaires de calibrage, formés par exemple d'une succession de palettes articulées entre elles et munies de perforations destinées au passage des fumées. De plus étant donné que dans cette phase de formage on souhaite réduire l'épaisseur du matelas d'un facteur généralement compris entre 3 et 10, ces palettes doivent présenter une rigidité suffisante pour leur conférer une grande résistance mécanique leur permettant résister à la contre-pression exercée par le matelas de fibres minérales. Il ressort de ces différentes considérations que les dimensions des palettes sont obligatoirement choisies dans des limites relativement étroites, la largeur étant typiquement comprise entre 10 et 25 cm. Par ailleurs, comme les convoyeurs de calibrage sont du type bande sans fin, il existe toujours un certain jeu entre les palettes pour autoriser leur rotation. De plus, de par l'usure des palettes ou tout simplement la difficulté d'un réglage très fin, les palettes ne sont jamais rigoureusement alignées et ne sont donc pas toutes exactement à la même hauteur. Sur le produit fini, ces diverses irrégularités se traduisent par des marques en forme de marches. Au moment de la pose du parement, la surface de collage effectif est limitée aux "marches" hautes ce qui ne permet pas un collage satisfaisant et de plus, comme les couches de parement utilisées sont très minces, ces "marches" sont apparentes même sur le produit fini.

Pour remédier à ce défaut, il est connu de rectifier l'état de surface de la couche de base en laine minérale par un rabotage lui conférant une surface lisse et plane. Ce rabotage présente toutefois des inconvénients majeurs. D'une part, il n'est pas possible de l'effectuer en ligne directement sur la bande continue délivrée par l'installation de fabrication et d'autre part au cours du rabotage on enlève une épaisseur de produit comprise par exemple entre 1 et 3 mm ce qui pose bien sûr le problème des déchets, mais surtout prive le panneau de l'élément de renfort mécanique que constitue la croûte toujours un peu plus dense que l'ensemble du produit.

Par ailleurs, il est connu de la demande de brevet FR-A-2 548 695 d'augmenter le caractère isotrope de l'orientation des fibres de la couche en laine minérale en lui faisant subir en continu une compression longitudinale par passage entre des séries de convoyeurs délimitant ses faces inférieure et supérieure, ladite compression résultant du passage d'une paire de convoyeurs animée d'une certaine vitesse à une paire de convoyeurs de vitesse inférieure à la précédente, ceci avant l'enceinte chauffante de réticulation du liant imprégnant les fibres.

Il est connu du brevet CH-620 861 un procédé permettant également de comprimer longitudinalement la couche, où la couche de laine minérale est comprimée et acheminée progressivement à l'aide de paires de rouleaux convoyeurs jusqu'à son entrée dans l'enceinte de réticulation qu'elle traverse à vitesse plus réduite.

Par ailleurs, il est connu du brevet US-3,082,143 un procédé d'application en continu d'une couche de parement sur une couche de laine minérale, consistant après une première compression de la couche entre deux convoyeurs, à effectuer une compression supplémentaire lors de la pose du parement, afin que celui-ci présente une surface bien lisse et tendue une fois les forces de compression sur la couche relâchées.

Du document US-2,997,096, il est connu en outre de comprimer et/ou lisser la surface d'une couche de laine minérale dans l'enceinte de réticulation en la faisant passer entre un convoyeur inférieur animé d'une certaine vitesse et un patin supérieur stationnaire.

Il est également connu du brevet FR-1 547 950 un traitement de finissage de panneaux en fibres de bois, consistant à soumettre les ébauches en pulpe de fibre à une opération de pressage à haute température entre des paires de rouleaux, de manière à ce qu'une des paires de rouleaux, notamment intermédiaire, soit animée d'une vitesse périphérique différente de la vitesse d'avancement des panneaux imposée par les autres paires de rouleaux. On obtient ainsi un effet de "repassage" des faces des panneaux, permettant de les peindre ultérieurement.

L'invention a pour objet un procédé d'obtention d'une surface plane et lisse d'un produit en laine minérale qui ne présente pas les inconvénients précités, c'est-à-dire qui ne soit pas destructeur de la croûte surfacique créée lors du formage du produit et qui soit applicable directement en ligne.

Cet objet est résolu selon l'invention par les caractéristiques de la revendication 1.

Cette mesure a pour effet de différencier les deux états de surface du matelas en cours de conformation de par une différenciation des deux convoyeurs, dont l'un devient le convoyeur entraîneur - qui détermine la vitesse de la ligne - et l'autre le convoyeur lisseur. Selon un mode de réalisation de l'invention, le convoyeur entraîneur est le convoyeur le plus rapide, le côté du feutre à son son contact présente une surface plus rugueuse, alors que du côté convoyeur le plus lent, on constate un lissage de la surface avec un léger étirement des fibres. En choisissant de lisser côté convoyeur rapide, on évite la formation de plis, plus spécialement lorsque le côté à lisser du feutre est pourvu d'un revêtement tel un voile en fibres de verre, conformément à un mode préféré de l'invention. Ce procédé tire donc avantage de ce que l'état de surface du matelas n'est pas définitivement figé avant la polymérisation complète du liant. Conformément à un des objectifs de l'invention, le lissage est ainsi obtenu sans suppression de la couche surfacique formant la croûte.

Le rapport des vitesses des deux convoyeurs de calibrage est un point essentiel de l'invention. D'un point de vue purement théorique, on peut calculer qu'un début de lissage de la surface est susceptible d'être obtenu si la longueur équivalente de décalage correspond par exemple à une demi-palette. Toutefois, si on considère le fait que l'enceinte de conformation et de polymérisation du liant ou étuve a une longueur typique de 15 mètres, que les convoyeurs avancent avec une vitesse d'environ 10 m/s et qu'enfin les palettes ont une largeur de par exemple 15 cm, on calcule qu'une variation de vitesse équivalente à un décalage d'une largeur de palette signifie un écart de moins de 5 % entre les vitesses des deux convoyeurs de calibrage. Il est évident que si on cherche encore à diminuer nettement cet écart, on atteint alors des valeurs limites du point de vue de la précision des vitesses et du pilotage des convoyeurs, limites que l'on peut fixer par exemple à un écart minimum de 2 %. D'autre part, il n'est généralement pas souhaitable, ni même utile de décaler les deux convoyeurs d'une longueur équivalente à plus de 4 palettes par exemple ; au-delà, on atteint une limite mécanique due à des problèmes d'entraînement des moteurs des convoyeurs en raison des forces de frottement très élevées créées par les grandes vitesses.

Cette mesure liée à un simple réglage des moteurs d'entraînement des convoyeurs de calibrage et de transport peut être accompagnée d'autres mesures qui améliorent l'effet de lissage obtenu. On peut ainsi accentuer le phénomène d'adhérence sur le convoyeur le plus lent en veillant à établir une circulation forcée des gaz au travers du matelas telle que au moins dans la première partie d'étuve, là où se forment proprement dit la croûte surfacique, les gaz pénètrent dans le matelas de laine minérale par la face attenante au convoyeur lisseur et s'en échappent au travers du convoyeur entraîneur et donc le plus rapide. De cette façon, d'un côté les fibres ont tendance à s'incruster dans les orifices de palettes, et on retrouve après les marques des orifices sur cette face du produit non apparente après le montage du panneau, alors qu'elles sont au contraire étirées sur la face opposée qui est lissée.

Dans une autre variante plus particulièrement préférée de l'invention et déjà évoquée plus haut, la face du matelas que l'on veut lisser est recouverte d'un revêtement avant que le matelas ne pénètre dans l'étuve de polymérisation dont les convoyeurs de calibrage et de transport sont réglés comme précédemment. Pour convenir à la mise en oeuvre du procédé selon l'invention, un revêtement doit présenter différentes qualités au nombre desquelles citons plus particulièrement une résistance à la traction élevée de façon à lui imposer une certaine tension favorisant un aspect final lisse, une porosité suffisante pour ne pas gêner la circulation du courant gazeux chaud au travers du matelas et bien sûr une tenue à haute température suffisante pour supporter sans dégradation la température régnant dans l'étuve. Ces exigences sont satisfaites avec un voile en fibres de verre textiles, fixé au matelas de laine minérale dans l'enceinte de conformation et de polymérisation par le liant même contenu dans celui-ci. On peut ainsi utiliser un voile de fibres de verre obtenu par voie humide suivant une technique analogue aux techniques de fabrication du papier à partir de fibres de verre étirées mécaniquement en continu sous forme de fils coupés dans un étape suivante. On peut également utilisé un voile de fibres de verre obtenu par voie sèche par exemple, conformément à l'enseignement de la publication FR-A-2 519 036. Le grammage du voile en fibres de verre peut être choisi parmi les plus bas grammages commercialisés, soit par exemple un voile de 0,5 mm d'épaisseur pour un grammage compris entre 35 g/m² et 80 g/m². Des voiles plus denses améliorent la rigidité du panneau mais sont plus chers.

Le lissage obtenu est encore amélioré si on combine l'utilisation d'un tel voile avec un choix du sens de circulation des gaz conforme à celui indiqué précédemment.

En dehors de l'aspect premier de lissage d'une face du matelas de laine minérale, le voile confère avantageusement un certain renfort mécanique au produit qui complète celui des deux couches surfaciques plus riches en liant organique car légèrement plus comprimées. De plus, il facilite le collage du parement d'aspect posé ultérieurement, car sa porosité est un peu moins grande que celle du matelas de laine minérale, ce qui permet de diminuer les quantités de colle nécessaire.

Dans certains cas, on peut souhaiter que les deux faces du matelas soient recouvertes par un voile en fibres de verre. Dans ce cas, le voile côté "non lisse" sera de préférence collé en reprise après l'étuve de polymérisation du liant et non mis en contact avec le matelas dès le départ, afin d'éviter le risque d'un entraînement du matelas de laine minérale alternativement par les deux convoyeurs dus à la trop faible rugosité des faces revêtues. Un travail directement en ligne est toutefois possible en jouant comme indiqué précédemment sur la circulation des gaz chauds.

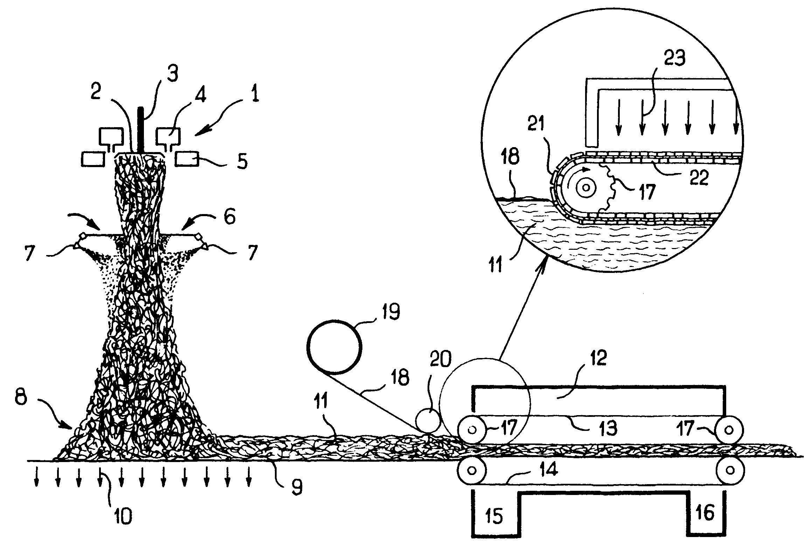

D'autres détails et caractéristiques avantageuses ressortent de la description d'un exemple de mise en oeuvre de l'invention faite ci-après, en référence à la planche unique annexée où est représentée de façon très schématique une ligne de production de panneaux isolants à base de laine de verre.

Une telle ligne comporte une unité de fibrage 1 en soi parfaitement connue comportant un ou plusieurs centrifugeurs 2 constitués par une pièce en forme d'assiette dont la paroi périphérique est munie d'un grand nombre d'orifices par lesquels s'échappe sous forme d'une multitude de filaments le verre fondu amené par un jet 3 depuis un four de fusion ici non représenté. Le centrifugeur 2 est entouré par une série de brûleurs annulaires 4 qui créent à la périphérie de la paroi périphérique un courant gazeux à grande vitesse et à température suffisamment élevée pour étirer les filaments de verre en fibres. Des moyens de chauffage 5 par exemple du type inducteurs servent en outre à maintenir le verre et le centrifugeur à la bonne température. Les fibres forment sous le centrifugeur 2 un tore refermé par l'air induit schématisé par les flèches 6. Ce tore est encerclé par un dispositif 7 de pulvérisation de l'encollage contenant le liant en solution aqueuse.

Le fond de la hotte de fibrage est fermé par un dispositif 8 de réception des fibres par exemple constitué par un convoyeur 9 formé par une bande sans fin perméable à l'eau sous laquelle sont disposés des caissons d'aspiration (flèches 10) des fumées et des compositions aqueuses excédentaires. Il se forme ainsi sur le convoyeur 9 un matelas 11 de laine de verre qui est conduit jusqu'à l'enceinte 12 de conformation et de polymérisation. Cette enceinte 12 est constituée par une chambre fermée ou une série de caissons pressurisés alimentés par des brûleurs en air chaud mis en circulation par des ventilateurs. L'enceinte est traversée par deux convoyeurs complémentaires 13, 14 de transport et de calibrage, ces convoyeurs 13, 14 sont mus en rotation par des moteurs placés dans les fosses 15, 16 et sont constitués conformément à l'enseignement du brevet français 2 394 041 par une succession de palettes rigides perforées articulées entre elles. Tout en assurant le passage des gaz chauds favorisant la prise rapide du liant, ces convoyeurs compriment le matelas pour lui donner l'épaisseur souhaitée, qui pour un panneau de plafond est typiquement comprise entre 20 et 100 mm, la densité de la couche de laine de verre étant par exemple comprise entre 20 et 80 kg/m³.

Comme indiqué dans la vue partielle agrandie, les convoyeurs 13 et 14 sont constitués par une série de palettes 21, fixées sur une chaîne 22 engrenant sur des poulies 17. Pour la rotation, il est nécessaire de préserver un certain jeu entre les différentes palettes 21. D'autre part, il se produit des phénomènes d'usure ou d'encrassement qui conduisent à remplacer certaines palettes de sorte qu'après un certain temps de production, les convoyeurs 13 et 14 ne délimitent plus des surfaces rigoureusement planes et le matelas garde après conformation l'empreinte de ces défauts.

Pour y remédier en produisant des panneaux dont la face ultérieurement revêtue d'un parement apparent est relativement lisse, le convoyeur inférieur 14 est par exemple mû plus rapidement que le convoyeur supérieur 13. Pour une étuve de 15 mètres de long, de très bons résultats ont été par exemple obtenus avec un écart de vitesse d'environ 3 %, correspondant à environ 2 fois la largeur des palettes perforées.

L'effet de lissage est encore amélioré si on recouvre la face concernée du matelas par un voile en fibres de verre textiles 18 dévidé à partir d'un rouleau 19 et appliqué par un rouleau presseur 20 sur le matelas peu avant son entrée dans l'enceinte 12. Dans le mode de réalisation ici représenté, le voile 18 est appliqué sur la face supérieure du matelas mais il est aussi possible de le placer directement sur le convoyeur 9 de façon à recueillir les fibres de verre directement sur le voile dans la hotte de fibrage ; dans ce cas on inversera naturellement les rapports de vitesse des deux convoyeurs.

De plus, côté convoyeur rapide - qui définit la vitesse de la ligne et sert donc d'entraîneur -, on peut avantageusement améliorer la rugosité du feutre en faisant circuler les gaz de l'étuve de telle sorte qu'il pénètre par le produit du côté à lisser comme l'indiquent les flèches 23. Il doit être noté qu'au delà de la première section de l'étuve, dès lors que la "croûte" est formée, on peut inverser le sens de circulation des gaz comme il est bien connu pour les étuves de l'art. En sortie d'étuve 12 et sur sa face lisse revêtue du voile de verre 18, le produit est par exemple pourvu d'un revêtement d'aspect, le voile facilitant cette opération, car il est moins poreux que la couche isolante. Le matelas ainsi préparé est ensuite découpé en panneaux aux dimensions souhaitées puis conditionnés par lots.

## Revendications

1. Procédé de fabrication de produits en laine minérale selon lequel la laine minérale est recueillie pour former un matelas (11) sur une bande convoyeuse (9) sans fin après aspersion (7) par un liant organique thermodurcissable, conduite à une enceinte (12) de conformation et de polymérisation du liant comportant un dispositif propre à établir une circulation au travers du produit d'un courant gazeux chaud (23) et deux convoyeurs (13, 14) complémentaires de calibrage et de transport entre lesquels le matelas est comprimé et conduit hors de l'étuve, **caractérisé en ce que** lesdits convoyeurs sont constitués par une pluralité d'éléments (21) articulés perforés du type palettes **et en ce que** les vitesses des deux convoyeurs (13, 14) de calibrage et de transport sont différentes, la différence de vitesse correspondant sur toute la longueur de l'enceinte (12) à un décalage d'une longueur équivalente à au moins la largeur d'une palette (21) et au plus 4 fois la largeur de celle-ci, de sorte qu'une des faces du matelas est lissée pendant la conformation du produit en laine minérale, le convoyeur (14) le plus rapide étant le convoyeur entraînant le produit qui est lissé du côté du convoyeur (13) le plus lent.

2. Procédé selon la revendication 1, **caractérisé en ce que** la largeur des palettes (21) des convoyeurs (13, 14) est comprise entre 10 et 25 cm.

3. Procédé selon la revendication 1 ou 2, **caractérisé en ce que** dans la section de l'enceinte (21) attenante à l'entrée, le sens de circulation du courant gazeux chaud est tel que le courant gazeux chaud (23) pénètre dans le produit du côté du convoyeur de calibrage et de transport lisseur (13).

4. Procédé selon l'une des revendications précédentes, **caractérisé en ce qu**'avant que le matelas de laine minérale (11) ne pénètre dans l'enceinte de conformation et de polymérisation la face du matelas destinée à être lissée est couverte d'un revêtement (18) poreux et résistant à la traction.

5. Procédé selon la revendication 4, **caractérisé en ce** **que** ledit revêtement (18) est un voile de fibres de verre.

6. Application du procédé selon l'une des revendications 1 à 5 à la fabrication de panneaux isolants en laine minérale comportant sur une face un revêtement d'aspect.

## Claims

1. A method of producing mineral wool products according to which the mineral wool is collected to form a mat (11) on an endless conveyor belt (9) after spraying (7) with a thermosetting organic binder, conveyed to a shaping enclosure (12) for polymerising the binder and comprising an apparatus which can establish a circulation of heated gases (23) through the product, and two complementary calibrating and transporting conveyors (13, 14) between which the mat is compressed and carried out of the oven, characterised in that the said conveyors consist of a plurality of perforated and articulated elements (21) of the pallet type; and in that the speeds of the two calibrating and transporting conveyors (13, 14) are different, the difference in speeds corresponding over the entire length of the enclosure (12) to an offset of a length equivalent to at least the width of one pallet (21) or at least four times the width thereof, such that one of the surfaces of the mat is smoothed while the mineral wool product is being shaped, the more rapid conveyor (14) being the conveyor entraining the product which is smoothed on the slowest side of the conveyor (13).

2. A method according to Claim 1, characterised in that the width of the pallets (21) of the conveyors (13, 14) is between 10 and 25 cm.

3. A method according to Claim 1 or 2, characterised in that, in the section of the enclosure (12) which extends as far as the inlet, the sense of circulation of the heated gases is such that the flow of heated gases (23) penetrates the product from the side of the calibrating and smoothing transporting conveyor (13).

4. A method according to any one of the preceding claims, characterised in that, before the mineral wool mat (11) enters the shaping and polymerising enclosure, the surface of the mat which is to be smoothed is provided with a porous covering (18) which is resistant to traction.

5. A method according to Claim 4, characterised in that the said covering (18) is a film of glass fibres.

6. Application of the method according to any one of Claims 1 to 5 to the production of insulating panels which consist of mineral wool and which have one surface coated with an appearance covering.

## Patentansprüche

1. Verfahren zur Herstellung von Mineralwolleprodukten, bei dem die Mineralwolle so abgelegt wird, daß sie nach dem Besprühen (7) mit einem wärmeaushärtenden organischen Bindemittel auf einem endlosen Förderband (9) eine Matte (11) bildet, und in eine Kammer (12) zum Formgeben und zur Polymerisation des Bindemittels geleitet wird, welche eine eigene Vorrichtung zur Erzeugung eines über das Produkt zirkulierenden heißen Gasstroms (23) sowie zwei komplimentäre Kalibrier- und Fördervorrichtungen (13, 14) aufweist, zwischen denen die Matte komprimiert und aus dem Ofen geleitet wird, **dadurch gekennzeichnet, daß** die Fördervorrichtungen aus einer Mehrzahl von gelenkig verbundenen, perforierten Elementen (21) in der Art von Latten bestehen, sowie **dadurch, daß** die Geschwindigkeiten der beiden Kalibrier- und Fördervorrichtungen (13, 14) unterschiedlich sind, wobei der Geschwindigkeitsunterschied auf der gesamten Länge der Kammer (12) einer Verschiebung um eine Länge entspricht, welche mindestens gleich der Länge und höchstens gleich der vierfachen Breite einer Latte (21) ist, so daß eine Oberfläche der Matte während der Formgebung des Mineralwolleprodukts geglättet wird, wobei die schnellere Fördervorrichtung (14) das Produkt, welches auf der Seite der langsameren Fördervorrichtung (13) geglättet wird, weiterbefördert.

2. Verfahren nach Anspruch 1**, dadurch gekennzeichnet, daß** die Breite der Latten (21) der Fördervorrichtungen (13, 14) zwischen 10 und 25 cm liegt.

3. Verfahren nach Anspruch 1 oder 2, **dadurch gekennzeichnet, daß** der zirkulierende heiße Gasstrom (23) in dem zum Eingang gehörigen Abschnitt der Kammer (12) so gerichtet ist, daß er von der Seite der glättenden Kalibrier- und Fördervorrichtung (13) her in das Produkt eindringt.

4. Verfahren nach einem der vorhergehenden Ansprüche, **dadurch gekennzeichnet, daß** die zu glättende Fläche der Mineralwollmatte (11) vor dem Eintritt der Matte in die Formgebungs- und Polymerisationskammer mit einer porösen, reißfesten Kaschierung (18) bedeckt wird.

5. Verfahren nach Anspruch 4, **dadurch gekennzeichnet, daß** es sich bei der Kaschierung (18) um ein Glasfaservlies handelt.

6. Anwendung des Verfahrens nach einem der Ansprüche 1 bis 5 zur Herstellung von Dämmplatten aus Mineralwolle, welche auf einer Seite eine Sichtverblendung aufweisen.
